# FASCICULE DE BREVET EUROPEEN

(11) **EP 3 946 977 B1**
(45) Date de publication et mention de la délivrance du brevet: **04.10.2023**
(21) Numéro de dépôt: 20716725.5
(22) Date de dépôt: 27.03.2020
(51) Int. Cl.: B60C 11/03, B60C 11/13

(54) **BANDE DE ROULEMENT POUR VEHICULE AGRICOLE**
LAUFFLÄCHE FÜR EIN LANDWIRTSCHAFTLICHES FAHRZEUG
TREAD FOR AN AGRICULTURAL VEHICLE

(30) Priorité: 02.04.2019 FR 1903511
(43) Date de publication de la demande: 09.02.2022
(73) Titulaire: COMPAGNIE GENERALE DES ETABLISSEMENTS MICHELIN, 63000 Clermont-Ferrand (FR)
(72) Inventeur: PERRIN, Frédéric, 63040 CLERMONT-FERRAND Cedex 9 (FR)
(74) Mandataire: Millanvois, Patrick Jacques Jean
(86) Numéro de dépôt international: PCT/EP2020/058670
(87) Numéro de publication internationale: WO 2020/201066

(56) Documents cités:
- WO-A1-93/21028
- WO-A1-03/047886
- FR-A2- 2 201 193
- GB-A- 1 236 335
- GB-A- 2 021 049

## Description

[La présente invention concerne une bande de roulement destinée à équiper un véhicule agricole et plus particulièrement une bande de roulement dont la performance en traction en terrain meuble est améliorée.

Bien que non limitée à cette application, l'invention sera plus particulièrement décrite en référence à un véhicule agricole polyvalent c'est à dire un véhicule pouvant rouler aussi bien dans les champs en terrain meuble que sur route, tel qu'un tracteur agricole.

Une bande de roulement pour véhicule agricole peut par exemple être attachée à la périphérie d'un pneumatique, d'un bandage plein, d'une roue élastique non-pneumatique ou d'une chenille. Une telle bande de roulement est destinée à rouler sur divers types de sols tels que la terre plus ou moins compacte des champs, les chemins non goudronnés d'accès aux champs et les surfaces goudronnées des routes. Compte tenu de la diversité de l'usage, en champ et sur route, la bande de roulement d'un tracteur agricole doit présenter un compromis de performances entre la traction en champ, la résistance aux arrachements, la résistance à l'usure sur route, la résistance au roulement, le confort vibratoire sur route.

### DEFINITIONS

Par direction radiale, on entend dans le présent document toute direction qui est perpendiculaire à l'axe de rotation de la roue. Par roue, on entend, de façon non exhaustive, un pneumatique ou un bandage plein monté sur une jante, une roue élastique non-pneumatique ou une chenille. Cette direction correspond à la direction de l'épaisseur de la bande de roulement et est généralement référencée « **Z** ».

Par direction transversale ou axiale, on entend une direction parallèle à l'axe de rotation de la roue. Cette direction est généralement référencée «**Y** ».

Par direction circonférentielle, on entend une direction qui est tangente à tout cercle centré sur l'axe de rotation de la roue. Cette direction est perpendiculaire à la fois à la direction axiale et à toute direction radiale. Cette direction est généralement référencée « **X** ».

Un pneu comprend, de façon générale, un sommet comprenant radialement à l'extérieur une bande de roulement destinée à venir en contact avec le sol par l'intermédiaire d'une surface de roulement, deux bourrelets destinés à venir en contact avec une jante sur laquelle est monté le pneu et deux flancs reliant le sommet aux bourrelets. Un pneu pour tracteur agricole comprend une armature de carcasse, ancrée dans chaque bourrelet, usuellement composée d'au moins une couche d'éléments de renforcement textiles.

L'armature de carcasse est de façon usuelle surmontée radialement à l'extérieur par une armature de sommet composée d'une pluralité de couches de travail, chaque couche de travail étant constituée d'éléments de renforcement textiles ou métalliques enrobés dans un matériau élastomérique. Les éléments de renforcement sont en général croisés d'une couche à la suivante.

La bande de roulement, qui est la partie du pneu destinée à venir en contact avec le sol en roulage, comprend une surface portante parallèle ou substantiellement parallèle à l'armature de sommet du pneu. Sur la surface portante de la bande de roulement sont moulées des éléments de sculpture.

Une bande de roulement peut également être associée, non pas à un pneumatique ou un bandage plein destiné à être monté sur une jante rigide, mais associée à une chenille d'engin agricole ou à une roue élastique non-pneumatique c'est à dire structurellement déformable et dépourvue d'une cavité contenant de l'air sous pression.

### TECHNIQUE ANTÉRIEURE

Les bandes de roulement des pneus pour engins agricoles comportent conventionnellement des barrettes s'étendant du centre de la bande de roulement vers les épaules. Ces barrettes sont disposées de chaque côté du plan équatorial médian du pneu de manière à former un motif en V, la pointe du motif en V (ou encore motif en chevron) étant destinée à entrer la première dans l'aire de contact avec le sol. Les barrettes sont espacées entre elles pour former des sillons ou rainures ; la largeur de ces sillons est déterminée de façon à permettre un bon fonctionnement à la fois sur route et sur terrain meuble. Les barrettes présentent une symétrie par rapport au plan équatorial médian du pneumatique, avec le plus souvent un décalage circonférentiel entre les deux rangées de barrettes, similaire à celui obtenu par une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable. Les barrettes ont une face de contact destinée à rouler sur un sol rigide comme par exemple les routes empruntées pour se rendre à proximité des champs et une face d'attaque destinée à transmettre la force motrice lorsque l'engin agricole se déplace sur un terrain meuble, typiquement la terre des champs.

Des bandes de roulement comprenant seulement certains aspects de l'invention sont divulguées dans les documents GB 1 236 335 A, FR 2 201 193 A2, WO03/047886 A1 et WO9321028 A1.

Une insatisfaction récurrente concerne les performances de traction sur sol meuble des bandes de roulement connues lorsque la hauteur radiale des barrettes est largement réduite du fait de l'usure. La productivité des engins agricoles est directement liée à leur capacité de traction sur sol meuble. Améliorer cette performance tout au long de la durée d'usage du pneu permettrait à l'utilisateur d'améliorer non seulement le rendement de son matériel mais aussi de diminuer ses coûts d'exploitation. Naturellement, l'amélioration de la traction au cours de l'usure ne doit pas se faire au détriment d'autres performances comme par exemple le confort et la possibilité de rouler à vitesse suffisamment élevée sur route.

### RÉSUMÉ DE L'INVENTION

Cet objectif a été atteint selon l'invention par une bande de roulement selon la revendication 1 pour l'essieu moteur d'un engin agricole.

De préférence, l'angle **α** est au moins égal à 2 degrés.

De préférence l'angle **β** est au moins égal à 100 degrés.

De préférence, le pas longitudinal **L** séparant les éléments de sculpture secondaires entre eux est compris entre 15 mm et 25 mm.

De préférence, la hauteur radiale HR2 des éléments de sculpture secondaires est comprise entre 2 et 8 mm.

De préférence, les faces d'attaque et de contact des éléments de sculpture secondaires définissent des arêtes inclinées par rapport à la direction axiale de la bande de roulement.

De préférence, les arêtes forment un motif en « V », la pointe du « V » étant dirigée vers l'avant de la bande de roulement selon le sens de roulement.

L'invention concerne également un pneumatique, une chenille et une roue non pneumatique comprenant une telle bande de roulement.

D'autres caractéristiques et avantages de l'invention ressortent de la description faite ci-après en référence au dessin annexé qui montre, à titre d'exemple non limitatif, une forme de réalisation de l'objet de l'invention.

### BRÈVE DESCRIPTION DES DESSINS

La figure **1** est une vue en perspective montrant un pneu comprenant une bande de roulement selon un premier mode de réalisation de l'invention.
La figure **2** est une vue à plus grande échelle du détail **D1** de la bande de roulement de la figure **1****.**
La figure **3** est une vue en coupe dans le plan équatorial médian du pneu de la figure **1****.**
La figure **4** est une vue de face montrant un pneu comprenant une bande de roulement selon un deuxième mode de réalisation de l'invention.
La figure **5** est une vue en perspective montrant une chenille comprenant une bande de roulement selon un troisième mode de réalisation de l'invention.
La figure **6** est une vue à plus grande échelle du détail **D2** de la bande de roulement de la figure **5**.
La figure **7** est une vue de côté à plus grande échelle d'une partie de la chenille de la figure **5****.**

### DESCRIPTION DÉTAILLÉE

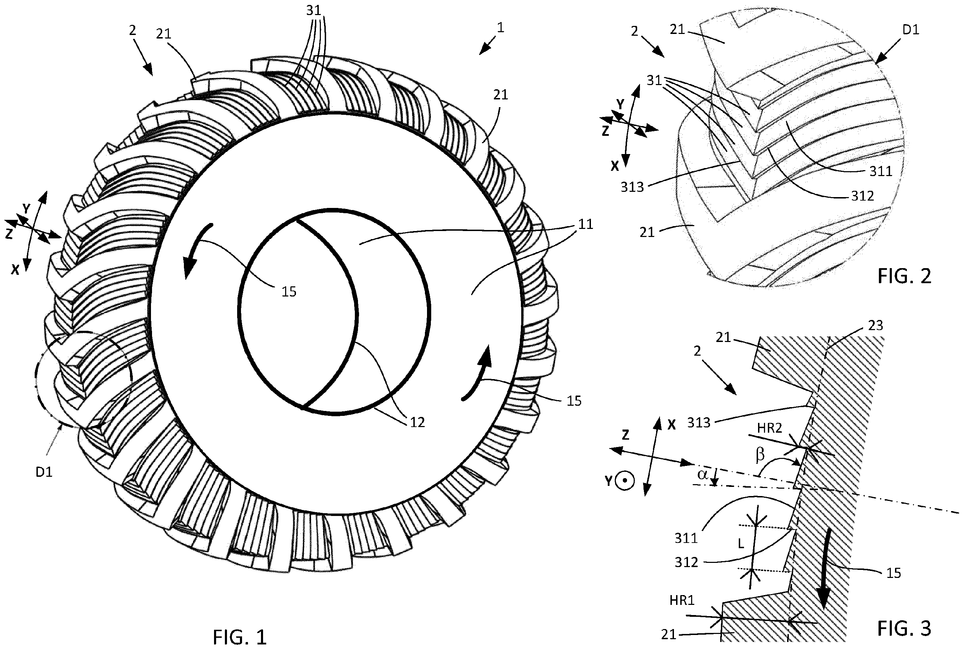

À la figure **1****,** on a représenté un pneu **1** comprenant une bande de roulement **2** selon l'invention. Ce pneu est destiné à équiper un essieu moteur d'un engin agricole. Ce pneu comprend en outre des flancs **11** et des bourrelets **12** de manière connue en soi. Le sens de roulement préférentiel du pneu est indiqué par des flèches **15** moulées sur les flancs du pneu et/ou sur l'épaule de la bande de roulement La bande de roulement **2** comprend des éléments de sculpture principaux **21** sous la forme d'un ensemble de barrettes s'étendant radialement vers l'extérieur et réparties sur la circonférence de la bande de roulement. Des éléments de sculpture secondaires **31** de hauteur radiale bien moindre sont disposés entre les barrettes selon la direction circonférentielle.

Le détail **D1** visible à plus grande échelle à la figure **2** permet de mieux distinguer la forme générale et l'orientation des éléments de sculpture secondaires **31.** Dans ce mode de réalisation, cinq éléments de sculpture secondaires sont présents entre deux barrettes **21.** Chacun de ces éléments de sculpture secondaires est sensiblement parallèle aux barrettes, présente un profil triangulaire et selon le sens de rotation préféré **15,** comporte une face d'attaque **312** et une face de contact **311,** la face d'attaque ayant une orientation proche de la direction radiale **Z,** et la face de contact ayant une orientation proche de la direction longitudinale **X.** Les faces d'attaque et de contact définissent des arêtes **313.**

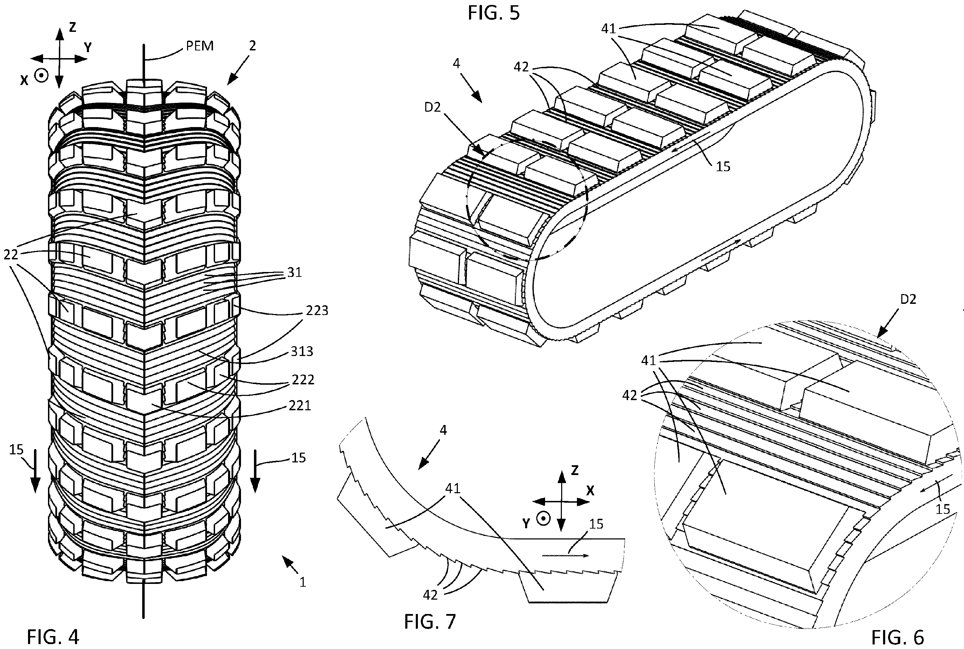

La figure **3** montre en coupe dans le plan équatorial médian du pneu (voir plan équatorial médian **PEM** sur la figure **4**) les proportions des différents éléments de sculpture de ce mode de réalisation. Les éléments de sculpture principaux, c'est à dire ici les barrettes **21** ont une hauteur radiale **HR1** d'environ 40 mm alors que les éléments de sculpture secondaires **31** ont une hauteur radiale **HR2** d'environ 4,3 mm. Selon l'invention, le rapport entre **HR1** et **HR2** est au moins égal à 4 et vaut 9,3 dans le mode de réalisation représenté ici.

La figure **3** montre également l'orientation des faces d'attaque **312** et de contact **311** des éléments de sculpture secondaires. Les faces d'attaque sont inclinées d'un angle **α** vers l'avant par rapport à la direction radiale **Z** selon le sens de roulement préférentiel de la bande de roulement (indiqué par les flèches **15)** et les faces de contact **311** sont inclinées d'un angle **β** vers l'arrière par rapport à la direction radiale **Z** selon le sens de roulement préférentiel de la bande de roulement. Selon l'invention, l'angle **α** est compris entre -5 degrés et 15 degrés et l'angle **β** est compris entre 95 degrés et 110 degrés. Dans ce mode de réalisation, **α** vaut environ 3 degrés et **β** vaut environ 100 degrés.

Les éléments de sculpture secondaires sont répartis selon un pas longitudinal **L** compris selon l'invention entre 5 mm et 50 mm. Le pas **L** vaut environ 25 mm dans le présent mode de réalisation.

La figure **4** montre en vue de face un pneu comportant une autre mode de réalisation de la bande de roulement de l'invention. Sur cette vue on visualise bien le plan équatorial médian **PEM** qui est perpendiculaire à la direction axiale **Y** et qui sépare la bande de roulement en deux moitiés égales.

Dans le mode de réalisation de la figure **4****,** les éléments de sculpture principaux sont des blocs **22** et non plus des barrettes **21** comme sur le mode de réalisation des figures **1** à **3****.** De part et d'autre de blocs centraux **221,** deux blocs intermédiaires **222** et un bloc d'épaule **223** forment des rangées orientées à la manière des barrettes du premier mode de réalisation. Les éléments de sculpture secondaires **31** sont similaires à ceux des figures précédentes.

Cette figure permet également d'illustrer plus clairement que les faces d'attaque et de contact des éléments de sculpture secondaires définissent des arêtes **313** inclinées par rapport à la direction axiale de la bande de roulement. Les arêtes **313** forment un motif en « V », la pointe du « V » étant dirigée vers l'avant de la bande de roulement selon le sens de roulement.

Les bandes de roulement représentées ici sont parfaitement symétrique par rapport au plan équatorial médian du pneu. Dans des variantes non représentées, les motifs des deux moitiés des bandes de roulement situées de part et d'autre du plan équatorial médian peuvent au contraire être décalés l'une par rapport à l'autre selon la direction circonférentielle comme c'est souvent le cas pour les sculptures à barrettes des pneus agricoles de l'état de la technique.

A la figure **5****,** on a représenté un troisième mode de réalisation de la bande de roulement de l'invention appliqué dans ce cas à une chenille **4.** Cette bande de roulement comporte des éléments de sculpture principaux sous la forme de blocs **41** et des éléments de sculpture secondaires **42** disposés entre les barrettes selon la direction circonférentielle de manière similaire à ce qui a été décrit par les figures précédentes. Les orientations, dimensions et pas longitudinal de ces éléments de sculpture secondaires obéissent aux mêmes règles que celles décrites plus haut dans le contexte d'un pneu.

Des tests comparatifs ont montré que les bandes de roulement des figures **1** et **4** apportent par rapport à une bande de roulement conventionnelle une augmentation très sensible de la performance de traction sur sol meuble lorsque leurs éléments de sculpture principaux sont complètement usés. On a pu mesurer des gains entre 10% et 25% selon les conditions des tests et en particulier selon le taux de glissement considéré.

L'invention ne saurait être limitée à ces seuls exemples de réalisation décrits et diverses modifications peuvent y être apportées tout en restant dans le cadre tel que défini par les revendications.

## Revendications

1. Bande de roulement (2) pour l'essieu moteur d'un engin agricole, ladite bande de roulement comprenant des éléments de sculpture principaux (21) et des éléments de sculpture secondaires (31) s'étendant radialement vers l'extérieur à partir d'une surface portante (23), les éléments de sculpture principaux ayant une hauteur radiale HR1 et les éléments de sculpture secondaires étant disposés longitudinalement entre les éléments de sculpture principaux et ayant une hauteur radiale HR2, ladite bande de roulement étant **caractérisée en ce que :**
- le rapport HR1/ HR2 est au moins égal à 4,
- les éléments de sculpture secondaires (31), sensiblement parallèles aux éléments de sculpture principaux (21) et présentant un profil triangulaire dans un plan équatorial médian (PEM) du pneu, comportent une face de contact (311) et une face d'attaque (312), ladite face d'attaque étant inclinée d'un angle α vers l'avant par rapport à la direction radiale (Z) selon le sens de roulement (15) de la bande de roulement, ladite face de contact étant inclinée d'un angle β vers l'arrière par rapport à la direction radiale (Z) selon le sens de roulement (15) de la bande de roulement,
- l'angle α est compris entre -5 degrés et 15 degrés,
- l'angle β est compris entre 95 degrés et 110 degrés, et
- le pas longitudinal **L** séparant les éléments de sculpture secondaires entre eux est compris entre 5 mm et 50 mm.

2. Bande de roulement selon la revendication **1 dans laquelle** l'angle α est au moins égal à 2 degrés.

3. Bande de roulement selon l'une des revendications **1** ou **2 dans laquelle** l'angle β est au moins égal à 100 degrés.

4. Bande de roulement selon l'une des revendications précédentes **dans laquelle** le pas longitudinal **L** séparant les éléments de sculpture secondaires entre eux est compris entre 15 mm et 25 mm.

5. Bande de roulement selon l'une des revendications précédentes **dans laquelle** la hauteur radiale HR2 des éléments de sculpture secondaires est comprise entre 2 et 8 mm.

6. Bande de roulement selon l'une des revendications précédentes **dans laquelle** les faces d'attaque et de contact des éléments secondaires définissent des arêtes (313) inclinées par rapport à la direction axiale (**Y**) de la bande de roulement.

7. Bande de roulement selon la revendication 6 **dans laquelle** les arêtes (313) forment un motif en « V », la pointe du « V » étant dirigée vers l'avant de la bande de roulement selon le sens de roulement (15).

8. Pneumatique (1) comprenant une bande de roulement selon l'une des revendications précédentes.

9. Roue non pneumatique comprenant une bande de roulement selon l'une des revendications **1** à **7**.

10. Chenille pour engin agricole comprenant une bande de roulement selon l'une des revendications **1** à **7**.

## Patentansprüche

1. Laufstreifen (2) für die Antriebsachse einer landwirtschaftlichen Maschine, wobei der Laufstreifen Hauptprofilelemente (21) und sekundäre Profilelemente (31), die sich von einer tragenden Fläche (23) aus radial nach außen erstrecken, umfasst, wobei die Hauptprofilelemente eine radiale Höhe HR1 aufweisen und die sekundären Profilelemente längs zwischen den Hauptprofilelementen angeordnet sind und eine radiale Höhe HR2 aufweisen, wobei der Laufstreifen **dadurch gekennzeichnet ist, dass**:
- das Verhältnis HR1/HR2 mindestens gleich 4 ist,
- die sekundären Profilelemente (31), die im Wesentlichen parallel zu den Hauptprofilelementen (21) sind und in einer äquatorialen Mittelebene (PEM) des Reifens ein dreieckiges Profil aufweisen, eine Kontaktfläche (311) und eine Vorderfläche (312) aufweisen, wobei die Vorderfläche in der Laufrichtung (15) des Laufstreifens um einen Winkel α bezüglich der radialen Richtung (Z) nach vorn geneigt ist, wobei die Kontaktfläche in der Laufrichtung (15) des Laufstreifens um einen Winkel β bezüglich der radialen Richtung (Z) nach hinten geneigt ist,
- der Winkel α zwischen -5 Grad und 15 Grad liegt,
- der Winkel β zwischen 95 Grad und 110 Grad liegt, und
- die Längsteilung L, welche die sekundären Profilelemente voneinander trennt, zwischen 5 mm und 50 mm liegt.

2. Laufstreifen nach Anspruch 1, wobei der Winkel α mindestens gleich 2 Grad ist.

3. Laufstreifen nach einem der Ansprüche 1 oder 2, wobei der Winkel β mindestens gleich 100 Grad ist.

4. Laufstreifen nach einem der vorhergehenden Ansprüche, wobei die Längsteilung L, welche die sekundären Profilelemente voneinander trennt, zwischen 15 mm und 25 mm liegt.

5. Laufstreifen nach einem der vorhergehenden Ansprüche, wobei die radiale Höhe HR2 der sekundären Profilelemente zwischen 2 und 8 mm liegt.

6. Laufstreifen nach einem der vorhergehenden Ansprüche, wobei die Vorderflächen und die Kontaktflächen der sekundären Elemente Kanten (313) definieren, die bezüglich der axialen Richtung (Y) des Laufstreifens geneigt sind.

7. Laufstreifen nach Anspruch 6, wobei die Kanten (313) ein V-förmiges Muster bilden, wobei die Spitze des "V" in der Laufrichtung (15) zum vorderen Teil des Laufstreifens gerichtet ist.

8. Reifen (1), welcher einen Laufstreifen nach einem der vorhergehenden Ansprüche umfasst.

9. Nicht-pneumatisches Rad, welches einen Laufstreifen nach einem der Ansprüche 1 bis 7 umfasst.

10. Raupenkette für eine landwirtschaftliche Maschine, welche einen Laufstreifen nach einem der Ansprüche 1 bis 7 umfasst.

## Claims

1. Tread (2) for the drive axle of an agricultural vehicle, the said tread comprising main tread pattern elements (21) and secondary tread pattern elements (31) extending radially towards the exterior from a bearing surface (23), the main tread pattern elements having a radial height HR1 and the secondary tread pattern elements being disposed longitudinally between the main tread pattern elements, and having a radial height HR2, the said tread being **characterised in that:**
- the ratio of HR1 to HR2 is at least equal to 4;
- the secondary tread pattern elements (31), which are substantially parallel to the main tread pattern elements (21), and have a triangular profile in a median equatorial plane (PEM) of the tyre, comprise a contact face (311) and a leading face (312), the said leading face being inclined by an angle α towards the front relative to the radial direction (Z) according to the direction of travel (15) of the tread, the said contact face being inclined by an angle β towards the rear relative to the radial direction (Z) according to the direction of the travel (15) of the tread;
- the angle **α** is between -5 degrees and 15 degrees,
- the angle **β** is between 95 degrees and 110 degrees; and
- the longitudinal spacing **L** which separates the secondary tread pattern elements from one another is between 5 mm and 50 mm.

2. Tread according to claim **1, wherein** the angle α is at least equal to 2 degrees.

3. Tread according to one of claims **1** or **2, wherein** the angle **β** is at least equal to 100 degrees.

4. Tread according to one of the preceding claims, **wherein** the longitudinal spacing **L** which separates the secondary tread pattern elements from one another is between 15 mm and 25 mm.

5. Tread according to one of the preceding claims, **wherein** the radial height HR2 of the secondary tread pattern elements is between 2 and 8 mm.

6. Tread according to one of the preceding claims, **wherein** the leading and contact faces of the secondary elements define ridges (313) which are inclined relative to the axial direction (**Y**) of the tread.

7. Tread according to claim 6, **wherein** the ridges (313) form a pattern in the form of a "V", with the point of the "V" facing towards the front of the tread according to the direction of travel (15).

8. Tyre (1) comprising a tread according to one of the preceding claims.

9. Non-pneumatic wheel comprising a tread according to one of claims **1** to **7.**

10. Caterpillar track for an agricultural vehicle comprising a tread according to one of claims **1** to **7.**
